Europäisches Patentamt

European Patent Office

Office européen des brevets

(11) Numéro de publication: **0 429 354 A1**

# DEMANDE DE BREVET EUROPEEN

(21) Numéro de dépôt: 90403277.8

(22) Date de dépôt: 21.11.90

(51) Int. Cl.5: **B29C 67/22**, B29C 35/16, F25D 3/10, //B29K75:00

(30) Priorité: 21.11.89 FR 8915237

(43) Date de publication de la demande:
29.05.91 Bulletin 91/22

(84) Etats contractants désignés:
AT BE CH DE DK ES FR GB GR IT LI LU NL SE

(71) Demandeur: L'AIR LIQUIDE, SOCIETE ANONYME POUR L'ETUDE ET L'EXPLOITATION DES PROCEDES GEORGES CLAUDE
75, Quai d'Orsay
F-75321 Paris Cédex 07(FR)

Demandeur: RECTICEL, Société dite:
6, Boulevard du Général Leclerc
F-92115 Clichy(FR)

(72) Inventeur: Damman, Bernard
8, Allée des Charmilles
F-38490 Les Abrets(FR)
Inventeur: Cousin, Georges
15 allée du Verseau
F-27100 Le Val de Reuil(FR)

(74) Mandataire: Loyer, Bertrand et al
Cabinet Pierre Loyer 77, rue Boissière
F-75116 Paris(FR)

(54) Procédé de mise en forme de mousses de matières plastiques.

(57) Procédé de mise en forme de mousses synthétiques, caractérisé par le fait qu'on refroidit la mousse jusqu'à une température telle que la matière des parois des cellules devienne cassante et on estampe la pièce de mousse ainsi refroidie avec un poinçon ayant la forme voulue ; de telle sorte que les parois des cellules se trouvant dans le volume occupé par le poinçon soient brisées et que, lorsque le poinçon est retiré, il laisse dans la mousse une empreinte correspondant exactement à sa forme.

## PROCÉDÉ DE MISE EN FORME DE MOUSSES DE MATIÈRES PLASTIQUES

La présente invention a pour objet un procédé de mise en forme de mousses cellulaires.

Il est connu d'usiner les mousses, telles par exemple que des mousses de polyuréthane au moyen d'outils tranchants. Il est connu également de déformer des pièces de mousses en les chauffant localement et les comprimant dans les zones chauffées. On peut, selon cette méthode, obtenir une grande variété de formes en introduisant avant chauffage, à l'intérieur de la mousse, un outil que l'on gonfle pour déformer la masse de la mousse par l'intérieur.

Il est cependant impossible de travailler des mousses par estampage parce qu'elles reprennent immédiatement leur forme d'origine.

La présente invention a pour objet un procédé de mise en forme de mousses synthétiques, caractérisé par le fait que l'on refroidit la mousse jusqu'à une température telle que la matière des parois des cellules devienne cassante et on estampe la pièce ainsi refroidie avec un poinçon ayant la forme voulue, cette opération ayant pour effet de briser toutes les parois des cellules se trouvant dans le volume occupé par le poinçon de sorte que lorsque le poinçon est retiré, il laisse dans la mousse une empreinte correspondant exactement à sa forme.

Dans le cas particulier de la mousse de polyuréthane, la température pour laquelle les cellules se brisent sous l'effet de poinçonnage d'un outil est de -120°C et au-delà. Au-dessus de cette limite les parois de certaines cellules ne se brisent pas et les cellules reprennent leur forme d'origine à la température normale.

Il est possible de refroidir la mousse de plusieurs façons.

Selon un premier mode de mise en oeuvre du procédé selon l'invention, on refroidit les pièces en mousse à travailler par convection en les faisant par exemple passer dans un tunnel de refroidissement traversé par un gaz froid, par exemple provenant d'une source d'azote liquide. Cette façon de procéder permet de limiter la consommation d'azote liquide, mais exige un temps de mise en froid important et, malgré cela, le réchauffement de la mousse est très rapide ce qui exige une mise en oeuvre très rapide du poinçonnage.

Selon un deuxième mode de mise en oeuvre du procédé selon l'invention, on refroidit dans la masse la pièce de mousse à travailler en insufflant un gaz froid au travers de la mousse. Cette méthode donne un refroidissement très rapide, une très bonne utilisation des frigories, mais présente l'inconvénient de risquer de provoquer certaines déformations de la mousse.

Selon un troisième mode de mise en oeuvre du procédé on immerge la mousse dans un bain d'azote liquide. Cette méthode donne une mise en froid très rapide, sans déformations sensibles de la mousse et un temps de mise en oeuvre relativement long du fait qu'une quantité importante du liquide est retenue dans la mousse. Elle présente l'inconvénient de consommer beaucoup d'azote liquide.

Selon un quatrième mode de mise en oeuvre du procédé, on pulvérise par aspersion de l'azote liquide sur la surface de la mousse. Cette méthode donne également une mise en froid très rapide.

Quel que soit le procédé employé, on peut avantageusement utiliser un poinçon refroidi, par exemple, un poinçon creux parcouru par de l'azote liquide.

Quelle que soit la méthode mise en oeuvre, il ne reste plus, après retour à la température ambiante, qu'à nettoyer la pièce des poussières engendrées par le bris des parois des cellules pour obtenir un état de surface correct.

La présente invention n'est pas limitée au travail des mousses de polyuréthane mais peut s'appliquer à toutes les mousses synthétiques, et notamment aux mousses à cellules ouvertes.

Pour déterminer la température limite en dessous de laquelle il faut travailler, il suffit de procéder par essais successifs afin de déterminer celle à partir de laquelle la mousse a perdu son élasticité et ne se déforme plus élastiquement, la matière constituant les parois des cellules se brisant lorsqu'on la soumet à une pression mécanique.

## Revendications

1. Procédé de mise en forme de mousses synthétiques, caractérisé par le fait qu'on refroidit la mousse jusqu'à une température telle que la matière des parois des cellules devienne cassante et on estampe la pièce de mousse ainsi refroidie avec un poinçon ayant la forme voulue ; de telle sorte que les parois des cellules se trouvant dans le volume occupé par le poinçon soient brisées et que, lorsque le poinçon est retiré, il laisse dans la mousse une empreinte correspondant exactement à sa forme.

2. Procédé selon la revendication 1, caractérisé par le fait que la température limite au-dessous de laquelle il faut opérer est déterminée par essais successifs et est celle à partir de laquelle la matière des parois des cellules n'a plus aucune élasticité et se brise lorsqu'on la soumet à une pression mécanique.

3. Procédé selon les revendications 1 et 2, caractérisé par le fait qu'il est plus particulièrement destiné aux mousses synthétiques à cellules ouvertes.

4. Procédé selon la revendication 3, caractérisé par le fait qu'il est applicable aux mousses de polyuréthanes, la température limite étant de -120°C environ.

5. Procédé de mise en oeuvre de l'invention, selon les revendications 1 à 4, caractérisé par le fait qu'on refroidit les pièces de mousse à travailler par convection dans un tunnel de refroidissement parcouru par un gaz froid.

6. Procédé de mise en oeuvre de l'invention selon les revendications 1 à 4, caractérisé par le fait qu'on refroidit la mousse dans la masse en y insufflant un gaz froid.

7. Procédé de mise en oeuvre de l'invention, selon les revendications 1 à 4, caractérisé par le fait qu'on immerge la pièce à travailler dans un bain d'azote liquide.

8. Procédé de mise en oeuvre de l'invention, selon les revendications 1 à 4, caractérisé par le fait qu'on pulvérise par aspersion de l'azote liquide sur la surface de la pièce de mousse à travailler.

9. Procédé selon l'une quelconque des revendications 5 à 8, selon lequel on emploie, pour estamper la pièce préalablement refroidie, un poinçon refroidi par exemple.

**Office européen des brevets**

# RAPPORT DE RECHERCHE EUROPEENNE

Numéro de la demande

**EP 90 40 3277**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1 451 108   (THE DOW CHEMICAL CO.)<br>* Page 1, colonne de gauche, lignes 10-39, colonne de droite, lignes 1-19; page 2, colonne de gauche, lignes 24-53; page 4, colonne de gauche, lignes 12-40; résumé, en particulier points 1,3,7,10; figure *<br>— — — | 1-4,7-8 | B<br>29 C 67/22<br>B 29 C 35/16<br>F 25 D 3/10 //<br>B 29 K 75:00 |
| A | GB-A-1 183 693   (THE FIRESTONE TIRE & RUBBER CO.)<br>* Page 1, lignes 11-44; revendications; figures 1-3a *<br>— — — | 1,5 | |
| A | DE-A-2 456 421   (CONTINENTAL GUMMI-WERKE AG)<br>* Revendications; figures 1,2 *<br>— — — | 6 | |
| A | DE-C-1 056 91   (BERTRAM GEORGE WORK et al.)<br>— — — | 1,2,6,9 | |
| A | EP-A-0 242 450   (GEA ENERGIESYSTEMTECHNIK GmbH)<br>— — — — — | 1-8 | |

|  | DOMAINES TECHNIQUES RECHERCHES (Int. Cl.5) |
|---|---|
|  | B 29 C<br>B 29 D |

Le présent rapport de recherche a été établi pour toutes les revendications

| Lieu de la recherche | Date d'achèvement de la recherche | Examinateur |
|---|---|---|
| La Haye | 25 février 91 | MOLTO PINOL F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant